# EUROPEAN PATENT APPLICATION

(11) **EP 4 258 506 A1**
(43) Date of publication of application: **11.10.2023**
(21) Application number: 21900436.3
(22) Date of filing: 19.11.2021
(51) Int. Cl.: H02J 7/00, H02J 7/10

(54) **CHARGING AND DISCHARGING DEVICE, CHARGE/DISCHARGE CONTROL METHOD, AND COMPUTER PROGRAM**

(30) Priority: 04.12.2020 JP 2020202105
(71) Applicant: Tsubakimoto Chain Co., Osaka 530-0005 (JP)
(72) Inventor: OKADA, Naoki, Osaka-shi, Osaka 530-0005 (JP); KOYAMA, Shingo, Osaka-shi, Osaka 530-0005 (JP)
(74) Representative: TBK
(86) International application number: PCT/JP2021/042607
(87) International publication number: WO 2022/118681

(57) **Abstract**

Provided are a charging and discharging device, a charge/discharge control method, and a computer program capable of causing a higher-level device to implement appropriate charge/discharge control. This charging and discharging device has a connector for a vehicle-mounted power cable connected to a vehicle-mounted storage battery provided in a vehicle, and controls charging and discharging of the vehicle-mounted storage battery. The charging and discharging device is provided with: a storage unit in which are stored, in advance, at least one of the minimum value and the maximum value of each of a charging power value, a charging current value, a discharging power value, and a discharging current value; a determining unit for determining, on the basis of data exchanged with a vehicle-mounted control device for controlling charging and discharging of the vehicle-mounted storage battery on the vehicle side, the values of at least one of the minimum value and the maximum value of each of the charging power value, the charging current value, the discharging power value, and the discharging current value during charging or discharging of the vehicle-mounted storage battery; and a notifying unit for notifying a higher-level control device of any of the values determined by the determining unit and values read from the storage unit.

## Description

### [Technical Field]

The present invention relates to a charging and discharging device connected to a storage battery provided in a vehicle, a charging and discharging control method, and a computer program.

### [Background Art]

Storage batteries provided in electric vehicles have relatively large battery capacities of, for example, 5 to 100 kWh. Techniques have been proposed to realize, other than using the power stored in these vehicles for the driving of electric vehicles, V2X including, for example, V2H (Vehicle to Home) that enables the supply of power stored in these vehicles to homes and the like, V2B (Vehicle to Building) that enables the supply of power stored in these vehicles to buildings other than homes, and V2G (Vehicle to Grid) that enables the supply of power stored in these vehicles to the power grid. Even if a power outage occurs due to a disaster, it can be expected that the power stored in the electric vehicle that can move will be supplied to sustain life or keep factories running. In order to realize V2X, it is desirable to be able to perform charging and discharging in a planned manner under the control of an EMS (Energy Management System).

Patent Document 1 discloses that a vehicle, which is an electric vehicle, is connected to a system that performs control for stable power supply and a storage battery of the vehicle is rapidly charged according to demand.

### [Prior Art Document]

### [Patent Document]

[Patent Document 1] International Publication No.2010/082506

### [Summary of Invention]

### [Problems to be Solved by Invention]

In order to stabilize the supply of power from a power system in the area including a storage battery mounted in a vehicle, other power storage devices, a power generation facility, each load, and the like, the EMS adjusts the amount of charging and discharging in the storage battery or the power storage devices. Therefore, a higher-level device such as the EMS acquires data, such as the charging and discharging capacity of the storage battery, from each device, and makes a charging and discharging plan according to the acquired data to perform control.

The charging and discharging of a storage battery mounted in a vehicle are controlled by a connected charging and discharging device based on instructions from a higher-level device such as the EMS. The charging and discharging device notifies the higher-level device of capacity values such as power that can be charged and discharged. However, in practice, storage batteries mounted in a wide variety of vehicles are not always charged and discharged with the same performance because the conditions differ depending on the control in the vehicle or the charging rate.

An object to an embodiment of the present invention is to provide a charging and discharging device, a charging and discharging control method, and a computer program that enable a higher-level device to perform appropriate charging and discharging control.

### [Means for Solving Problems]

A charging and discharging device according to an embodiment of the present disclosure is a charging and discharging device having a connector for an in-vehicle power line connected to an in-vehicle storage battery provided in a vehicle and controlling charging and discharging in the in-vehicle storage battery, and includes: a storage unit that stores in advance at least one of minimum and maximum values of each of a charging power value, a charging current value, a discharging power value, and a discharging current value; a determination unit that determines at least one of minimum and maximum values of each of a charging power value, a charging current value, a discharging power value, and a discharging current value when performing charging and discharging with the in-vehicle storage battery, based on data transferred to and from an in-vehicle control device for controlling charging and discharging in the in-vehicle storage battery on a vehicle side; and a notification unit that notifies a higher-level control device of either the values determined by the determination unit or the values read from the storage unit.

A charging and discharging control method according to an embodiment of the present disclosure is a method for controlling charging and discharging in an in-vehicle storage battery provided in a vehicle by a charging and discharging device having a connector for an in-vehicle power line connected to the in-vehicle storage battery, and includes: a step of determining at least one of minimum and maximum values of each of a charging power value, a charging current value, a discharging power value, and a discharging current value when performing charging and discharging with the in-vehicle storage battery, based on data transferred to and from an in-vehicle control device for controlling charging and discharging in the in-vehicle storage battery on a vehicle side; and a step of notifying a higher-level control device of either the determined values or values read from a storage unit that stores in advance at least one of minimum and maximum values of each of a charging power value, a charging current value, a discharging power value, and a discharging current value.

A computer program according to an embodiment of the present disclosure causes a computer mounted in a charging and discharging device having a connector for an in-vehicle power line connected to an in-vehicle storage battery provided in a vehicle to execute steps of: determining at least one of minimum and maximum values of each of a charging power value, a charging current value, a discharging power value, and a discharging current value when performing charging and discharging with the in-vehicle storage battery, based on data transferred to and from an in-vehicle control device for controlling charging and discharging in the in-vehicle storage battery on a vehicle side; and a step of notifying a higher-level control device of either the determined values or values read from a storage unit that stores in advance at least one of minimum and maximum values of each of a charging power value, a charging current value, a discharging power value, and a discharging current value.

In the charging and discharging device, the charging and discharging control method, and the computer program of the present disclosure, for the minimum or maximum values of a charging power value, a discharging power value, a charging current value, and a discharging current value in charging and discharging, the higher-level control device is notified of not only the values determined in advance by the charging and discharging device but also the values determined based on the data obtained from the in-vehicle control device as needed. The higher-level control device is accurately notified of the charging and discharging power values or current values that can actually be output from the in-vehicle storage battery.

In the charging and discharging device according to an embodiment of the present disclosure, the values stored in the storage unit are values determined as specifications of the charging and discharging device, and the values determined by the determination unit and the values stored in the storage unit are partially different.

In the charging and discharging device of the present disclosure, the higher-level control device is notified of values that are at least partially different from the minimum or maximum values of the charging power value, the discharging power value, the charging current value, and the discharging current value determined in advance in the charging and discharging device.

In the charging and discharging device according to an embodiment of the present disclosure, the determination unit determines at least one of the minimum and maximum values of each of the charging power value, the charging current value, the discharging power value, and the discharging current value according to characteristics of the vehicle.

In the charging and discharging device of the present disclosure, as a basis for determining the minimum or maximum values of the charging power, discharging power, charging current, and discharging current that can be output from the in-vehicle storage battery, vehicle characteristics correlated with these values are used. The minimum or maximum values can change depending on the vehicle type, model year, vehicle manufacturer, and the like. The minimum or maximum values can be stored according to the characteristics, and the appropriate minimum or maximum value for the connected vehicle can be determined based on the determined characteristics.

In the charging and discharging device according to an embodiment of the present disclosure, the determination unit determines at least one of the minimum and maximum values of each of the charging power value, the charging current value, the discharging power value, and the discharging current value according to whether or not the vehicle is a charge-only vehicle.

In the charging and discharging device of the present disclosure, at least one of the minimum and maximum values of each of the charging power value, the charging current value, the discharging power value, and the discharging current value may be determined according to whether or not the vehicle is a charge-only vehicle that is the characteristics of the vehicle.

### [Effects of Invention]

According to the present disclosure, the higher-level device is accurately notified of the capacity value of the power value or the current value that can actually be output by charging and discharging the in-vehicle storage battery. Therefore, the higher-level device can appropriately determine and control whether to perform charging or discharging based on the accurate capacity value or wait.

### [Brief Description of Drawings]

FIG. 1 is a schematic diagram of a charging and discharging system including a charging and discharging device.
FIG. 2 is a block diagram showing a connection configuration between a charging and discharging device and a vehicle.
FIG. 3 is a flowchart showing an example of a processing procedure of a control unit of the charging and discharging device.
FIG. 4 is a flowchart showing an example of the processing procedure of the control unit of the charging and discharging device.
FIG. 5 is a flowchart showing an example of a procedure for determining minimum and maximum values.

### [Mode for Carrying out Invention]

The present disclosure will be specifically described with reference to the diagrams showing embodiments thereof.

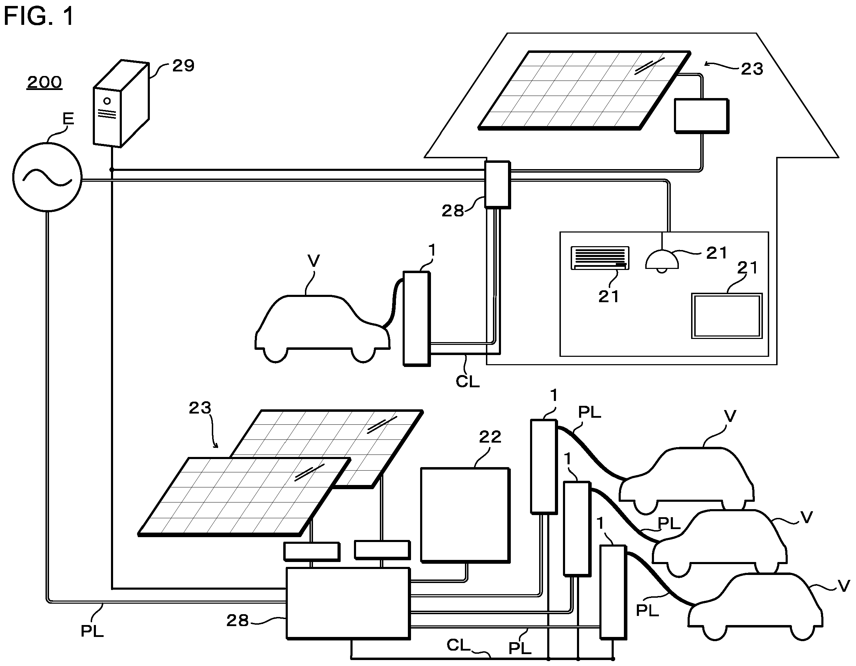

FIG. 1 is a schematic diagram of a charging and discharging system 200 including a charging and discharging device 1. The charging and discharging system 200 includes a load 21 arranged in the home, a power generation device 23, and the charging and discharging device 1. The power supplied from a power system E (commercial power supply) is branched to the load 21, the power generation device 23, and a vehicle V, which is connected through the charging and discharging device 1, through a power line PL by a distribution board 28. The charging and discharging device 1 is connected to a higher-level device 29 through a communication line CL with the distribution board 28 interposed therebetween. The power supply source may be not only the power system E but also a DC power network or a combination thereof. The power supply source may be another example as long as this can replace the power system E. The power supply source may be one that simulates a commercial system, or may be a power storage device or a power generation system.

The higher-level device 29 controls the transfer of power from the power system E to the load 21 and the transfer of power from the power generation device 23 to the load 21 group. In the present embodiment, explanations will be given on the assumption that the higher-level device 29 is installed outside as a server device and controls the transfer of power in the area. However, the higher-level device 29 may be provided on the distribution board 28 to control the charging and discharging of generated power in the home, or may be built into the charging and discharging device 1.

In another example, the charging and discharging system 200 includes a power storage device 22, the power generation device 23, and the charging and discharging device 1 installed in a parking lot that is a public facility. In this example as well, the power supplied from the power system E is branched to the power storage device 22, the power generation device 23, and the vehicles V, which are connected through a plurality of charging and discharging devices 1, through the power line PL by the distribution board 28. The charging and discharging system 200 may also include a fuel cell. In another example as well, the higher-level device 29 will be described as being provided outside as a server device. However, the higher-level device 29 may be provided on the distribution board 28 to control the charging and discharging of generated power in the public facility, or may be built into each charging and discharging device 1 to control charging and discharging.

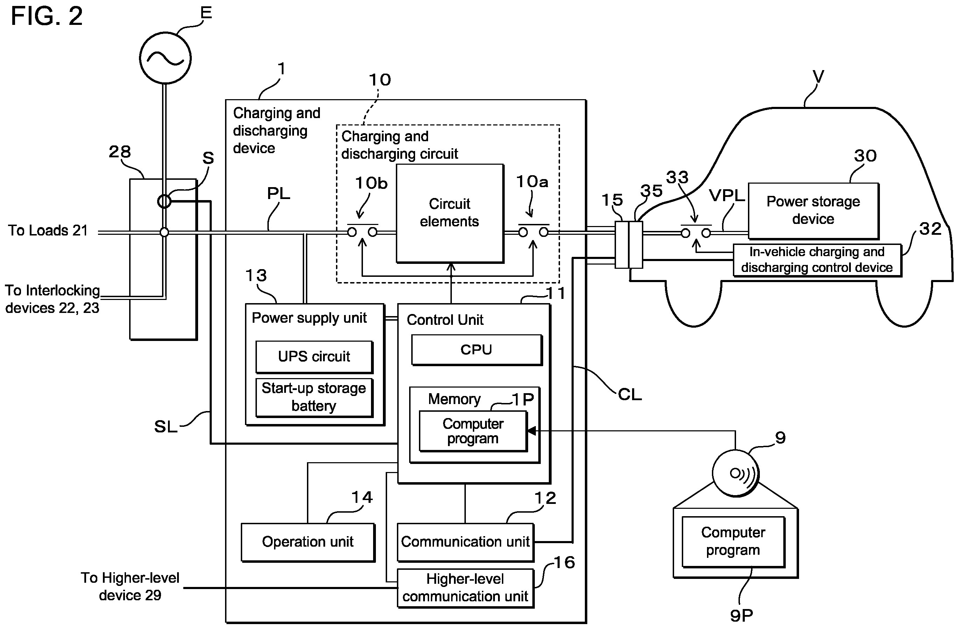

FIG. 2 is a block diagram showing a connection configuration between the charging and discharging device 1 and the vehicle V The vehicle V is an electric vehicle (EV), a hybrid electric vehicle (HEV), a plug-in hybrid electric vehicle (PHEV), or a fuel cell vehicle (FCV). The vehicle V includes a large-capacity power storage device 30 that can be used for its driving. The vehicle V includes a connector 35 for a power line VPL connected to the power storage device 30 and an in-vehicle charging and discharging control device 32 that controls charging and discharging in the power storage device 30. A DC relay 33 included in the charging and discharging circuit on the vehicle V side is interposed in the power line VPL, and the in-vehicle charging and discharging control device 32 controls ON and OFF of the DC relay 33. The connector 35 includes a communication terminal for communication connection with the in-vehicle charging and discharging control device 32.

The charging and discharging device 1 includes a charging and discharging circuit 10, a control unit 11, a communication unit 12, a power supply unit 13, an operation unit 14, and a higher-level communication unit 16. The charging and discharging circuit 10 includes various circuit elements such as a bidirectional inverter and various relays. The charging and discharging circuit 10 includes a DC relay 10a connected to a connector 15 connected to the vehicle V and a parallel-off relay 10b interposed in the power line PL connected to the power system E. The charging and discharging circuit 10 is connected to the connector 15 through the power line PL by using the DC relay 10a.

The control unit 11 controls circuit elements included in the charging and discharging circuit 10, and controls switching between charging and discharging, the amount of current, and the amount of voltage for the power storage device 30 of the vehicle V The control unit 11 includes a CPU (Central Processing Unit) and a nonvolatile memory, and the CPU controls the charging and discharging circuit 10 by performing control processing based on a computer program 1P stored in the nonvolatile memory. The nonvolatile memory stores rewritable setting values as described later.

The computer program 1P (computer product) stored in the non-volatile memory of the control unit 11 may be a computer program 9P stored in a computer-readable non-transitory storage medium 9, which is read by the CPU and stored in the memory.

The communication unit 12 can communicate with the in-vehicle charging and discharging control device 32 through the connector 15 and the connector 35. A protocol for the communication connection of the communication unit 12 only needs to comply with a charging and discharging method corresponding to the vehicle V and the connectors 15 and 35, and any one of a plurality of protocols may be selectively executed so as to be applied to different charging and discharging methods. In the present embodiment, the communication unit 12 communicates with the in-vehicle charging and discharging control device 32 through a CAN (Controller Area Network). Communication may be realized by PLC.

The power supply unit 13 includes a UPS (Uninterruptible Power Systems) circuit and a start-up storage battery, and supplies power to the control unit 11. The power supply unit 13 supplies power necessary for activating the charging and discharging device 1 from the start-up storage battery during a power outage. The power supply unit 13 may charge the start-up storage battery with power from the power system E, the power generation device 23, or the vehicle V

The operation unit 14 includes a display, a touch panel with a built-in display, and physical buttons, and is exposed on the exterior of the charging and discharging device 1 to receive operations including START and STOP from the user. The control unit 11 may control the charging and discharging circuit 10 based on an operation received through the operation unit 14.

The higher-level communication unit 16 realizes communication with the higher-level device 29 through the communication line CL. The higher-level communication unit 16 may be, for example, a communication module corresponding to the communication line CL conforming to Ethernet (registered trademark), or may be a communication module corresponding to the communication line CL compatible with ECHONET/ECHONETLite (registered trademark). The higher-level communication unit 16 may realize communication by PLC.

The control unit 11 of the charging and discharging device 1 is connected to a current sensor S, which measures a current for calculating the power supplied from the power system E in the distribution board 28, through the communication line CL. The control unit 11 can acquire from the current sensor S the power supplied from the power system E to the load 21 group and connected devices, such as the power storage device 22 and the power generation device 23.

As shown in FIGS. 1 and 2, the charging and discharging circuit 10 of the charging and discharging device 1 configured as described above is connected to the power storage device 30 of the vehicle V through the power line PL by using the DC relay 10a and the DC relay 33 on the vehicle V side when the connector 15 is connected to the connector 35 of the vehicle V As shown in FIGS. 1 and 2, the charging and discharging circuit 10 is connected to the power system E (or the DC power network), the load 21 group, and interlocking devices (the power storage device 22, the power generation device 23, and the like) through the power line PL by using the parallel-off relay 10b and the distribution board 28. The charging and discharging device 1 controls the transfer of power between the power system E (or the DC power network) and the power storage device 30 of the vehicle V, the load 21 group, and the connected devices. The charging and discharging device 1 may control the charging of the power storage device 30 by using the connected device as a power supply source. The charging and discharging circuit 10 can perform, through the power line PL, discharging from the power storage device 30 to the load 21 group or charging from the power system E to the power storage device 30 when all of the parallel-off relay 10b, the DC relay 10a, and the DC relay 33 are in the ON state.

While the charging and discharging device 1 is activated and after the vehicle V is connected thereto as a charging and discharging target, the charging and discharging device 1 needs to notify the higher-level device 29 of minimum and maximum values for four items of a charging power value, a discharging power value, a charging current value, and a discharging current value (hereinafter, referred to as four items) on every occasion. As the minimum and maximum values of the four items, there are numerical values defined as the specifications of the charging and discharging device 1 or the charging and discharging circuit 10 (hereinafter, referred to as specification values) and numerical values determined by the states of the in-vehicle charging and discharging control device 32 and the power storage device 30 of the vehicle V (hereinafter, referred to as actual values). The former specification value of the charging and discharging device 1 is stored in the non-volatile memory of the control unit 11 as an invariable value. The latter actual value according to the state of the vehicle V is sequentially acquired or calculated by the control unit 11 based on the transmission and reception of data to and from the vehicle V, the charging rate, and the like. The charging and discharging device 1 according to the present embodiment determines the minimum and maximum values of the four items according to the procedure shown in the flowchart below by using these numerical values, and notifies the higher-level device 29 of the determined minimum and maximum values of the four items.

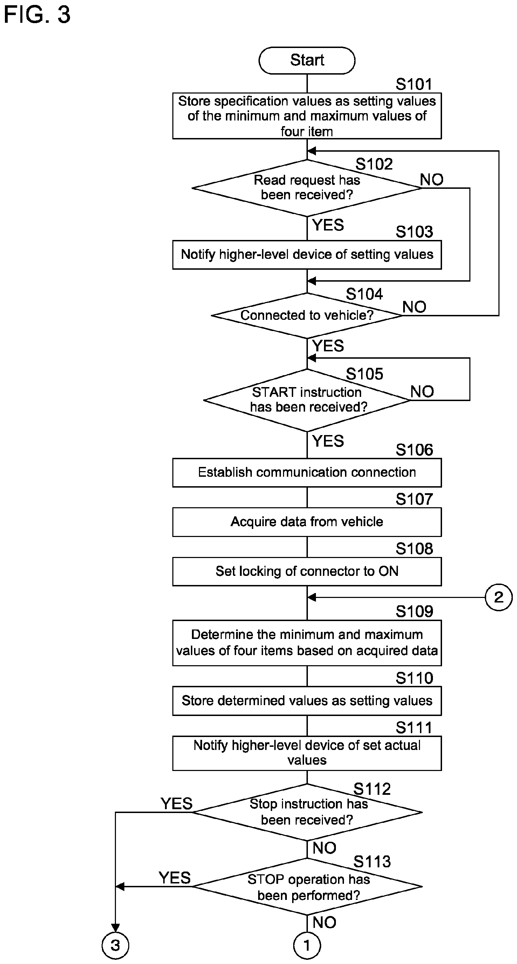

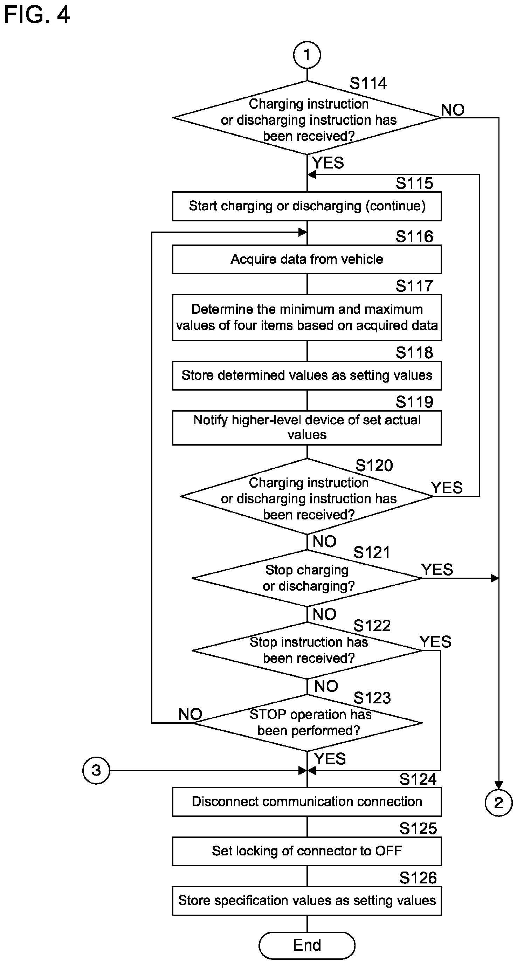

FIGS. 3 and 4 are flowcharts showing an example of the processing procedure of the control unit 11 of the charging and discharging device 1. When the charging and discharging device 1 is activated by the ON operation through the operation unit 14 or by the start of the supply of power from the power supply unit 13 based on the schedule, the control unit 11 of the charging and discharging device 1 performs the following processes based on the computer program 1P.

The control unit 11 stores the specification values of the charging and discharging device 1 as setting values of the minimum and maximum values of the four items to be notified of until the connection with the vehicle V is confirmed after activation (step S101).

The control unit 11 determines whether or not a read request for the numerical values of the four items has been received from the higher-level device 29 (step S 102). If it is determined that the read request has been received (S102: YES), the control unit 11 notifies the higher-level device 29 of the specification values set as the setting values in step S 101 through the higher-level communication unit 16 (step S103).

If it is determined that the read request has not been received (S102: NO), the control unit 11 advances the process to the next step S 104.

The control unit 11 determines whether or not a connection with the vehicle V has been detected at the connector 15 (step S 104). When it is determined that no connection is detected (S104: NO), the control unit 11 returns the process to step S102.

If it is determined in step S 104 that a connection has been detected (S104: YES), the control unit 11 determines whether or not a START instruction has been received from the operation unit 13 or the higher-level device 29 (step S 105). If it is determined that the START instruction has not been received (S105: NO), the control unit 11 returns the process to step S105 to wait until the START instruction is received. When the read request is received from the higher-level device 29 during standby, the control unit 11 may notify of the specification values set in step S101.

If it is determined that the START instruction has been received (S 105: YES), the control unit 11 starts communication processing for establishing a communication connection with the in-vehicle charging and discharging control device 32 through the communication unit 12 (step S 106). The communication connection herein is, for example, CAN communication.

The control unit 11 acquires, from the in-vehicle charging and discharging control device 32, data such as a charging rate (SOC), an upper limit charging rate for charge, a lower limit charging rate for discharge, a minimum charging current value, and a minimum discharging current value of the power storage device 30 of the vehicle V (step S107). In step S107, the control unit 11 may acquire not only data that can be acquired by the communication unit 12 but also data that can be determined by signal processing during predetermined connection processing in step S 106.

The control unit 11 sets the locking of the connector 15 and the connector 35 to ON (step S108).

The control unit 11 determines the minimum and maximum values of the four items using the data acquired in step S 107 or based on data acquired anew (step S109).

The control unit 11 stores the values determined in step S 109 as setting values (step S110). By step S110, the setting values, which were specification values, are overwritten with the actual values calculated based on the data acquired from the vehicle V

The control unit 11 notifies the higher-level device 29 of the set actual values through the higher-level communication unit 16 (step S111). In step S111, the control unit 11 may notify the higher-level device 29 in response to a request when a read request is received from the higher-level device 29, instead of providing push notification to the higher-level device 29. The control unit 11 sequentially notifies the higher-level device 29 of the latest actual values stored as setting values.

By step S111, there is a possibility that the charging and discharging device 1 will notify the higher-level device 29 of the minimum and maximum values of the four items including values different from the specification values defined by the specifications of the charging and discharging device 1.

The control unit 11 determines whether or not a stop instruction has been received from the higher-level device 29 (step S112). If it is determined that the stop instruction has been received (S112: YES), the control unit 11 advances the process to step S124, which will be described later.

If it is determined that the stop instruction has not been received (S112: NO), the control unit 11 determines whether or not a STOP operation has been performed on the operation unit 13 (step S 113). If it is determined that the STOP operation has been performed (S113: YES), the control unit 11 advances the process to step S124, which will be described later.

If it is determined that the STOP operation has not been performed (S113: NO), the control unit 11 determines whether or not a charging instruction or a discharging instruction has been received from the higher-level device 29 (step S114). If it is determined that the charging instruction or the discharging instruction has not been received (S114: NO), the control unit 11 returns the process to step S109.

If it is determined that the charging instruction or discharging instruction has been received (S114: YES), the control unit 11 starts charging or discharging based on the instruction (continues charging or discharging if the charging or discharging has already been started) (step S115). When charging or discharging is started, the control unit 11 acquires, from the in-vehicle charging and discharging control device 32 of the vehicle V, data such as a charging rate, a highest charging current value, a lowest charging current value, a highest discharging current value, and a lowest discharging current value (step S116). In step S116, the control unit 11 may acquire only data (charging rate) that is different from the data that can be acquired at the timing of step S107 from the in-vehicle charging and discharging control device 32 through the communication unit 12.

Based on the data acquired in step S 116, the control unit 11 determines a maximum charging power value, a minimum charging power value, a minimum discharging power value, a maximum discharging power value, a minimum charging current value, a maximum charging current value, a minimum discharging current value, and a maximum discharging current value (step S117). In step S117, the control unit 11 may calculate only the values changed by the data acquired in step S 116. For example, the control unit 11 may calculate only the maximum value or the minimum value of the charging power value and the charging current value during charging.

The control unit 11 stores the determined values as setting values (step S118). By step S118, the setting values are overwritten with the actual values calculated based on the latest data acquired from the vehicle V

The control unit 11 notifies the higher-level device 29 of the set actual values through the higher-level communication unit 16 (step S119). In step S119 as well, the control unit 11 may notify the higher-level device 29 only when a read request is received from the higher-level device 29, instead of providing push notification to the higher-level device 29.

The control unit 11 determines whether or not to continuously receive a charging instruction or a discharging instruction from the higher-level device 29 (step S 120). If it is determined to continue receiving the charging instruction or the discharging instruction (S120: YES), the control unit 11 returns the process to step S 115 to continue charging or discharging. Charging is continued while the charging instruction is received from the higher-level device 29, and discharging is started when an instruction to switch to discharging is given.

If it is determined that the charging instruction or the discharging instruction has not been received (S120: NO), the control unit 11 determines whether or not to stop charging or discharging (step S 121). In step S 121, the control unit 11 receives a standby instruction from the higher-level device 29, or determines to stop when the stop conditions are satisfied. The stop conditions are, for example, when the charging rate of the power storage device 30 of the vehicle V reaches a fully charged state (upper limit charging rate for charge or higher) during charging, and conversely, when the charging rate of the power storage device 30 reaches a lower limit charging rate for discharge during discharging.

When it is determined to stop in step S 121 (S121: YES), the control unit 11 returns the process to step S 109. This is a standby state.

If it is determined not to stop in step S121 (S 121: NO), neither the charging instruction nor the discharging instruction is received and the stop conditions are not satisfied. Therefore, the control unit 11 waits until these instructions are given or the stop conditions are satisfied. The control unit 11 determines whether or not a stop instruction has been received from the higher-level device 29 (step S 122). If it is determined that the stop instruction has been received (S122: YES), the control unit 11 advances the process to step S124, which will be described later.

If it is determined that the stop instruction has not been received (S122: NO), the control unit 11 determines whether or not a STOP operation has been performed on the operation unit 13 (step S123). If it is determined that the STOP operation has not been performed (S123: NO), neither the stop instruction has been received nor the STOP operation has been performed. In this case, the control unit 11 returns the process to step S116 to receive an instruction while determining new data or wait until the stop conditions are satisfied.

If it is determined in step S123 that the STOP operation has been performed (S123: YES), the control unit 11 disconnects the communication connection with the in-vehicle charging and discharging control device 32 of the vehicle V (step S124). The control unit 11 sets the locking of the connector 15 and the connector 35 to OFF (step S125). The control unit 11 sets the minimum and maximum values of the four items to the specification values of the charging and discharging device 1, that is, stores the minimum and maximum values of the four items as setting values (step S126), and ends the process. After step S126, the charging and discharging device 1 is stopped.

Instead of the processing of step S125, the storage of the setting values may be reset. Step S 126 may be skipped assuming that the setting value data is not stored until the next activation.

In addition, in the processing of steps S 124 to S 126, the communication connection may be disconnected, but the locking may be kept ON to resume the processing from step S101.

In the flowcharts of FIGS. 3 and 4, it has been explained that the communication connection between the charging and discharging device 1 and the in-vehicle charging and discharging control device 32 of the vehicle V is not made every time even in the standby state. However, if an instruction to stop charging and discharging is received in step S 121 (S121: YES), the communication connection may be disconnected once. In this case, the control unit 11 cannot acquire data from the vehicle V even if the process returns to step S 109. However, even in this state, until the locking of connector 15 and the connector 35 becomes OFF, that is, while the connector 15 and the connector 35 are connected to the same vehicle V, the control unit 11 may keep the minimum and maximum values of the four items stored as setting values and notify the higher-level device 29 of the latest values.

Thus, the charging and discharging device 1 between the higher-level device 29 that controls charging and discharging of the entire system including the vehicle V and the in-vehicle charging and discharging control device 32 that controls charging and discharging in the vehicle V accurately notifies the higher-level device 29 of the power value (current value), which can be output by actual charging and discharging in the vehicle V, as described above. By the accurate notification, the higher-level device 29 can appropriately recognize the power storage device 30 of the vehicle V as a charging and discharging destination and control the power storage device 30 of the vehicle V It is possible to avoid a situation in which charging and discharging cannot actually be started in the power storage device 30 of the vehicle V with the power value or current value as specified and accordingly, the higher-level device 29 cannot use the power storage device 30.

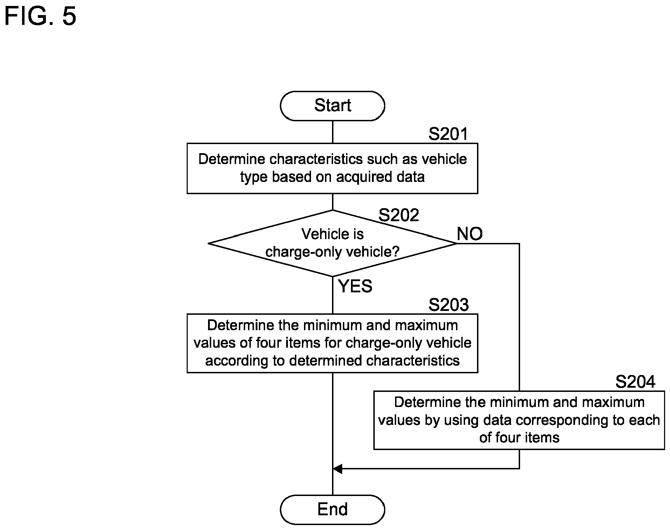

The processing procedure in steps S 109 and S 117 will be described in detail. FIG. 5 is a flowchart showing an example of a procedure for determining the minimum and maximum values of four items. The following determination procedure is merely an example, and is not limited to the following content, and may be only a part or may be a combination of parts.

Based on the acquired data, the control unit 11 determines characteristics such as the vehicle type, model year, or manufacturer of the vehicle V, which are correlated with the charging and discharging characteristics (step S201). In step S201, the control unit 11 may store data that can be acquired by the communication unit 12 in advance by vehicle type, model year, or manufacturer, and determine data that matches the content. The data includes a lowest charging and discharging current value, an upper limit current value, a lower limit current value, a lower limit battery charging rate for discharge, an upper limit battery charging rate for charge, an upper limit voltage for charge, a lower limit voltage for discharge, an upper limit for battery durability, and the like. In addition, the control unit 11 may determine data according to characteristics such as a response speed in the connection process up to communication connection.

The control unit 11 determines whether or not the vehicle V is a charge-only vehicle (step S202). When it is determined that the vehicle is a charge-only vehicle (S202: YES), the control unit 11 determines the minimum and maximum values of the four items for the charge-only vehicle according to the characteristics determined in step S201 (step S203), and ends the process. The control unit 11 may store the minimum and maximum values of the four items in the memory in advance so as to be associated with whether or not the vehicle is a charge-only vehicle, and select the minimum and maximum values of the four items according to whether or not the vehicle is a charge-only vehicle. In addition, even if the vehicle is a charge-only vehicle, the minimum and maximum values of the four items may be stored in advance in the memory so as to be associated with information indicating the manufacturer, model year, and vehicle type of the charge-only vehicle, so that the minimum and maximum values of the four items are selected according to the characteristics that can be determined.

In step S203, the control unit 11 determines that the discharging power value and the discharging current value are the specification values because discharging is not possible, and determines a value according to the characteristics such as a vehicle type, including zero, for the minimum value of the charging power value. The control unit 11 may store the minimum and maximum values of the four items in the memory in advance so as to be associated with the characteristics such as a vehicle type, and select the minimum and maximum values of the four items according to the characteristics that can be determined. The minimum value is not limited to zero, and may be determined as a minimum value determined on the vehicle V side. Similarly for the minimum charging current value, the control unit 11 may calculate and determine a value converted into a current value.

If it is determined in step S202 that the vehicle is not a charge-only vehicle (S202: NO), the control unit 11 determines the minimum and maximum values by using the data corresponding to each of the four items (step S204), and ends the process.

In step S204, the control unit 11 may determine the charging power value and the charging current value by using the data of an upper limit or a lower limit related to charging obtained from the vehicle V or the charging rate, for example. The control unit 11 may determine the maximum values of the discharging power value and the discharging current value by using an upper limit or a lower limit related to discharging obtained from the vehicle V The minimum value may be a minimum numerical value, such as zero, or may be a minimum value in consideration of a margin corresponding to the vehicle type or the like.

In step S204, the control unit 11 may select an appropriate calculation method for deriving a power value or a current value, which can be output, according to the state of the power storage device 30.

The embodiment disclosed as described above is illustrative in all respects and is not restrictive. The scope of the present invention is defined by the claims, and includes all modifications within the scope and meaning equivalent to the claims.

### [Description of Reference Numerals]

- 1: Charging and discharging device
- 10: Charging and discharging circuit
- 11: Control unit
- 12: Communication unit
- 14: Operation unit
- 16: Higher-level communication unit
- 1P: Computer program
- V: Vehicle
- 29: Higher-level device
- 32: In-vehicle charging and discharging control device

## Claims

1. A charging and discharging device having a connector for an in-vehicle power line connected to an in-vehicle storage battery provided in a vehicle and controlling charging and discharging in the in-vehicle storage battery, comprising:
a storage unit that stores in advance at least one of minimum and maximum values of each of a charging power value, a charging current value, a discharging power value, and a discharging current value;
a determination unit that determines at least one of minimum and maximum values of each of a charging power value, a charging current value, a discharging power value, and a discharging current value when performing charging and discharging with the in-vehicle storage battery, based on data transferred to and from an in-vehicle control device for controlling charging and discharging in the in-vehicle storage battery on a vehicle side; and
a notification unit that notifies a higher-level control device of either the values determined by the determination unit or the values read from the storage unit.

2. The charging and discharging device according to claim 1,
wherein the values stored in the storage unit are values determined as specifications of the charging and discharging device, and
the values determined by the determination unit and the values stored in the storage unit are partially different.

3. The charging and discharging device according to claim 1 or 2,
wherein the determination unit determines at least one of the minimum and maximum values of each of the charging power value, the charging current value, the discharging power value, and the discharging current value according to characteristics of the vehicle.

4. The charging and discharging device according to claim 3,
wherein the determination unit determines at least one of the minimum and maximum values of each of the charging power value, the charging current value, the discharging power value, and the discharging current value according to whether or not the vehicle is a charge-only vehicle.

5. A method for controlling charging and discharging in an in-vehicle storage battery provided in a vehicle by a charging and discharging device having a connector for an in-vehicle power line connected to the in-vehicle storage battery, the charging and discharging control method comprising:
a step of determining at least one of minimum and maximum values of each of a charging power value, a charging current value, a discharging power value, and a discharging current value when performing charging and discharging with the in-vehicle storage battery, based on data transferred to and from an in-vehicle control device for controlling charging and discharging in the in-vehicle storage battery on a vehicle side; and
a step of notifying a higher-level control device of either the determined values or values read from a storage unit that stores in advance at least one of minimum and maximum values of each of a charging power value, a charging current value, a discharging power value, and a discharging current value.

6. A computer program causing a computer mounted in a charging and discharging device having a connector for an in-vehicle power line connected to an in-vehicle storage battery provided in a vehicle to execute steps of:
determining at least one of minimum and maximum values of each of a charging power value, a charging current value, a discharging power value, and a discharging current value when performing charging and discharging with the in-vehicle storage battery, based on data transferred to and from an in-vehicle control device for controlling charging and discharging in the in-vehicle storage battery on a vehicle side; and
a step of notifying a higher-level control device of either the determined values or values read from a storage unit that stores in advance at least one of minimum and maximum values of each of a charging power value, a charging current value, a discharging power value, and a discharging current value.
